# EUROPÄISCHE PATENTSCHRIFT

(11) **EP 0 615 649 B1**
(45) Veröffentlichungstag und Bekanntmachung des Hinweises auf die Patenterteilung: **07.02.1996**
(21) Anmeldenummer: 92924559.5
(22) Anmeldetag: 04.12.1992
(51) Int. Cl.: G11B 17/22

(54) **PLATTENABSPIELGERÄT**
RECORD PLAYER
TOURNE-DISQUE

(30) Priorität: 06.12.1991 DE 4140234
(43) Veröffentlichungstag der Anmeldung: 21.09.1994
(73) Patentinhaber: NSM AKTIENGESELLSCHAFT, D-55411 Bingen (DE)
(72) Erfinder: MENKE, Wilhelm, D-6507 Ingelheim (DE); SCHULZE, Ulrich, D-6200 Wiesbaden (DE); NIEDERLEIN, Horst, D-6530 Bingen (DE); HEIDERSBERGER, Börge, D-6530 Bingen (DE)
(74) Vertreter: Becker, Bernd, Dipl.-Ing.
(86) Internationale Anmeldenummer: DE9201023
(87) Internationale Veröffentlichungsnummer: WO9311535

(56) Entgegenhaltungen:
- EP-A- 0 138 005
- EP-A- 0 183 856
- EP-A- 0 427 531
- WO-A-90/04845
- GB-A- 2 164 781
- US-A- 4 817 070
- DIGEST OF PAPERS NINTH IEEE SYMPOSIUM ON MASS STORAGE SYSTEMS STORAGE SYSTEMS:PERSPECTIVES 3. November 1988, MONTEREY CA. U.S.A. Seiten 147 - 153 , XP43957 R.S.BUTTURINI 'Performance simulation of a high capacity optical disk system'

## Beschreibung

Die Erfindung bezieht sich auf ein Plattenabspielgerät mit zwei einander gegenüberstehenden Plattenmagazinen, die in übereinanderliegenden Aufnahmefächern Plattenhalter mit Platten enthalten, und mit einer verfahrbaren Transporteinrichtung, um eine gewünschte Platte mit dem zugehörigen Plattenhalter zwischen dem Aufnahmefach und einer von mehreren, in der Vertikalachse der Plattenmagazine angeordneten Abspieleinheiten hin und her zu befördern.

Aus der DE 39 22 721 Al ist ein Plattenabspielgerät bekannt, bei dem die Plattenmagazine, die jeweils eine Vielzahl übereinanderliegend angeordneter Aufnahmefächer für die Lagerung einer entsprechenden Anzahl an je eine Platte aufnehmender Plattenhalterungen besitzen, seitlich in einem Gehäuse gegenüberliegend angeordnet sind. In dem Raum zwischen den Plattenmagazinen befindet sich eine auf und ab verfahrbare Transporteinrichtung zur Hin- und Herbeförderung einer gewünschten Platte mit dem zugehörigen Plattenhalter zwischen dem Aufnahmefach und einer Abspieleinheit. Die Transporteinrichtung weist zwei voneinander unabhängig steuerbare und auf dieser horizontal verfahrbare Auszugeinrichtungen für die Plattenhalterungen auf. Die Abspieleinheit ist feststehend zwischen und unterhalb der beiden gegenüberliegenden Plattenmagazine angebracht. Entweder befinden sich die beiden Auszugeinrichtungen der Transporteinrichtung jeweils in einer Bereitschaftsposition zur Herausnahme eines in dem zugeordneten Plattenmagazin vorhandenen Plattenhalters für eine Platte oder die eine Auszugeinrichtung ist in eine Mittenposition gefahren, in der sie die aus dem zugehörigen Plattenmagazin entnommene Platte mit dem Plattenhalter konzentrisch zu dem Plattenteller der Abspieleinheit fixiert, während die andere Auszugeinrichtung in ihrer Bereitschaftsposition für das andere Plattenmagazin verbleibt.

Um bei diesem bekannten Plattenabspielgerät ein zeitlich unmittelbares Abspielen von Platten hintereinander, wie es in Diskotheken gefordert wird, zu ermöglichen, sind mehrere Abspieleinheiten mit jeweils zugehöriger Transporteinrichtung unter Zwischenschaltung eines beidseitig offenen, durch benachbarte Transporteinrichtungen zugänglichen Plattenmagazins in Reihe nebeneinander angeordnet, wobei an jedem Ende der Reihe ein weiteres Plattenmagazin vorgesehen ist. Dies ist insofern nachteilig, als jeder Abspieleinheit eine gesonderte Transporteinrichtung zugeordnet ist, was einen erhöhten Raumbedarf erfordert. Darüber hinaus sind die Platten nach dem Abspielen stets nur wieder in demselben Plattenmagazin ablegbar. Zur Vermeidung dieser Nachteile ist bereits aus der US-A-4 817 070 ein Plattenabspielgerät gemäß dem Oberbegriff des Anspruchs 1 bekannt, das zwei einander gegenüberstehende Plattenmagazine mit übereinanderliegenden Aufnahmefächern für Plattenhalter mit Platten, eine verfahrbare Transporteinrichtung für die Plattenhalter und zwei unabhängig voneinander steuerbare, in der Vertikalachse eines der Plattenmagazine angeordnete Abspieleinheiten enthält. Mittels der Transporteinrichtung sind die Plattenhalter wahlweise zwischen beliebigen Aufnahmefächern und der einen oder anderen Abspieleinheit transportierbar. Weiterhin weist das Plattenabspielgerät ein einen Plattenhalter aufnehmendes Lade-Schubfach auf.

Der Erfindung liegt die Aufgabe zugrunde, ein Plattenabspielgerät der eingangs genannten Art zu schaffen, das bei einem einfachen und kompakten Aufbau eine zuverlässige Übergabe des Plattenhalters mit der Platte zwischen der Transporteinrichtung und der Abspieleinheit gewährleistet.

Diese Aufgabe wird erfindungsgemäß dadurch gelöst, daß
- oberhalb einer jeden Abspieleinheit eine über eine motorgetriebene Exzenter-Steuerung bewegbare Hebe- und Senkeinrichtung angeordnet ist,
- die Hebe- und Senkeinrichtung einen mit einem Plattenandrücker versehenen Tragarm für die Aufnahme des Plattenhalters mit der Platte aufweist, und
- der Tragarm über eine mit der Exzenter-Steuerung gekoppelte Halterung gleitbeweglich auf einer vertikal verlaufenden Führungsstange gelagert ist.

Durch diese Maßnahmen ist eine einwandfreie Überleitung des Plattenhalters mit der Platte von der Transporteinrichtung zu der Abspieleinheit und umgekehrt sichergestellt, wobei gleichzeitig eine konstruktiv einfache und eine wenig Platz beanspruchende Hebe- und Senkeinrichtung gegeben ist.

Nach einer vorteilhaften Ausgestaltung der Erfindung ist ein an der Halterung befestigter Antriebsmotor über ein Schnekkengetriebe mit dem auf der Welle des Schneckengetriebes sitzenden Exzenter gekoppelt, wobei der Exzenter sich derart auf einer ortsfesten Rolle abstützt, daß durch diese die obere und untere Endlage der Hebe- und Senkeinrichtung bestimmt wird.

Zwecks Überwachung der Bewegung der Hebe- und Senkeinrichtung sind bei einer weiteren Ausgestaltung der Erfindung zur Erkennung der oberen und unteren Endlage der Hebe- und Senkeinrichtung an der Halterung zwei übereinanderliegende Gabelkoppler befestigt, die mit einem entsprechend ortsfest angeordneten Steg zusammenwirken. Ferner ist zweckmäßigerweise an der Halterung ein Sensor zur Überwachung der exakten Ausrichtung der in dem Plattenhalter gespeicherten Platte zu dein Plattenteller der Abspieleinheit angeordnet.

Damit beim Abspielen die Platte genau auf dem Plattenteller der Abspieleinheit positioniert ist, setzt nach einer vorteilhaften Weiterbildung der Erfindung die einen Plattenhalter mit einer Platte aufnehmende Hebe- und Senkeinrichtung bei ihrer Abwärtsbewegung über die zugehörige Abspieleinheit hinaus in ihre Endposition die Platte unter Abheben aus dem Plattenhalter auf den Plattenteller der Abspieleinheit auf und verspannt sie mittels des an dem Tragarm der Hebe- und Senkeinrichtung feststehend angeordneten Plattenandrückers mit dein Plattenteller.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:
- Fig. 1: eine Vorderansicht eines Plattenabspielgerätes nach der Erfindung mit angedeuteten, möglichen Beförderungswegen einer aus einem Plattenmagazin entnommenen Platte,
- Fig. 2: eine alternative Ausführungsform des Plattenabspielgerätes nach Fig. 1,
- Fig. 3: eine weitere Alternativausführung des Plattenabspielgerätes nach Fig. 1,
- Fig. 4: eine weiteren Alternativausführung des Plattenabspielgerätes nach Fig. 1,
- Fig. 5: eine weitere Alternativausführung des Plattenabspielgerätes nach Fig. 1,
- Fig. 6: eine vergrößerte Einzeldarstellung des Plattenabspielgerätes nach Fig. 1,

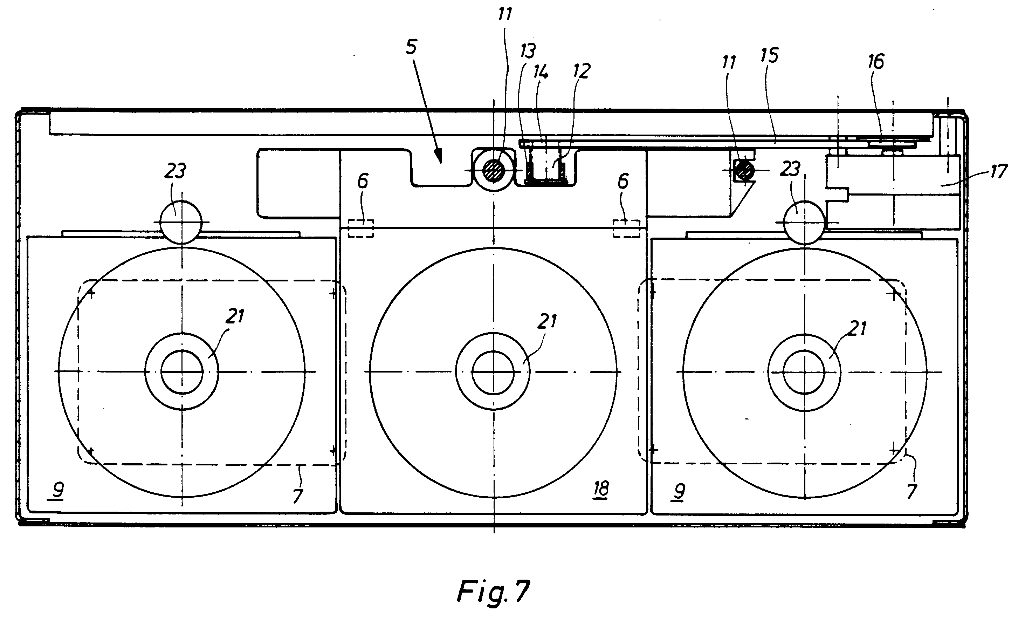

- Fig. 7: einen Querschnitt durch das Plattenabspielgerät nach Fig. 6,

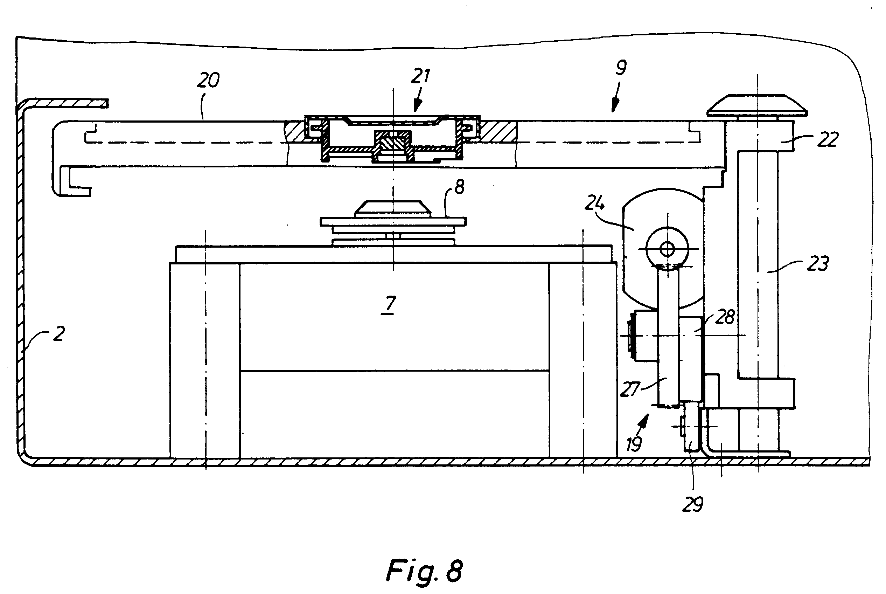

- Fig. 8: einen vergrößerten Ausschnitt der Seitenansicht des Plattenabspielgerätes nach Fig. 6 in Richtung des Pfeiles VIII,

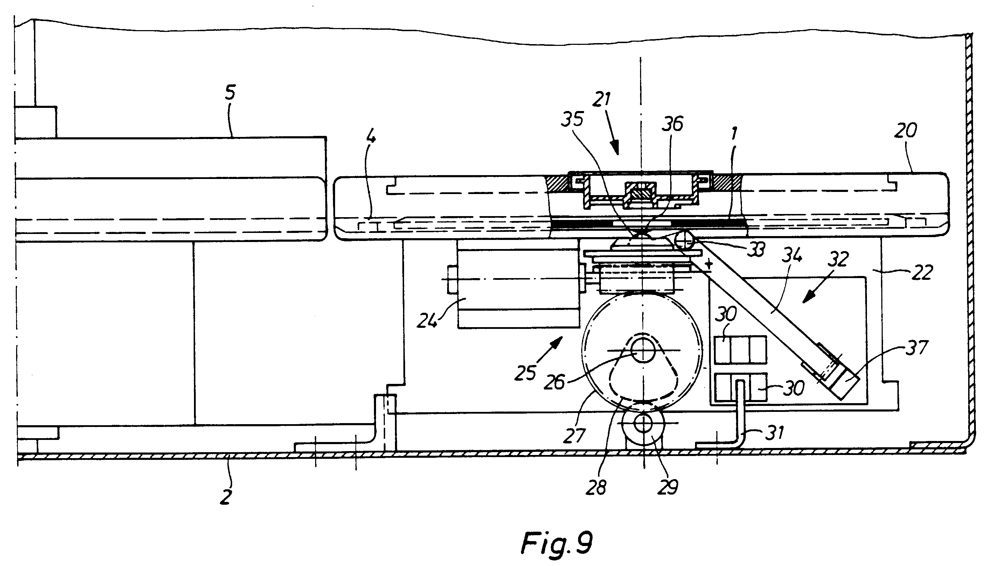

- Fig. 9: eine vergrößerte Darstellung der der rechten Abspieleinheit des Plattenabspielgerätes nach Fig. 6 zugeordneten Hebe- und Senkeinrichtung und

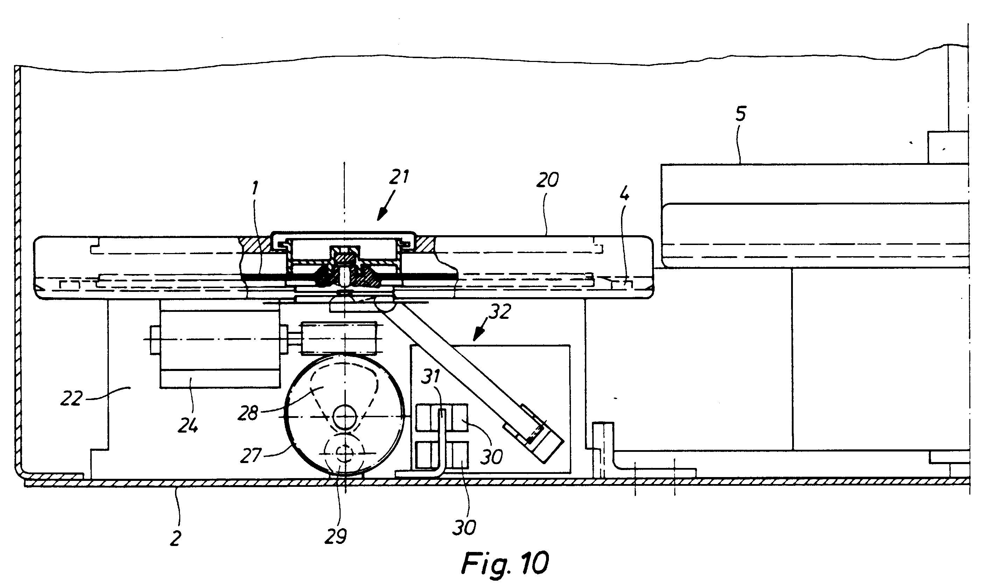

- Fig. 10: eine vergrößerte Darstellung der der linken Abspieleinheit des Plattenabspielgerätes nach Fig. 6 zugeordneten Hebe- und Senkeinrichtung.

Das Plattenabspielgerät, durch das auf Platten 1 gespeicherte Informationen, insbesondere Musikdarbietungen, optisch ausgelesen und wiedergegeben werden können, besitzt ein Gehäuse 2 mit einer nicht dargestellten Bedienungstafel, die verschiedene, mit einer zentralen Steuereinheit verbundene Tasten aufweist, beispielsweise eine Plattenauswahltaste, eine Plattenabspieltaste und eine Stopptaste. Seitlich im Gehäuse 2 sind gegenüberliegend Plattenmagazine 3 angeordnet. Die Plattenmagazine 3 sind untereinander identisch aufgebaut und besitzen jeweils eine Vielzahl übereinanderliegend angeordneter Aufnahmefächer für die Lagerung einer entsprechenden Anzahl an je eine Platte 1 aufnehmender Plattenhalter 4. In dem Raum zwischen den Plattenmagazinen 3 befindet sich eine auf und ab verfahrbare Transporteinrichtung 5 für den eine Platte 1 aufnehmenden Plattenhalter 4. Die Transporteinrichtung 5 weist zwei voneinander unabhängig steuerbare und auf dieser horizontal verfahrbare Auszugeinrichtungen 6 für die Plattenhalter 4 auf. Diese Auszugeinrichtungen 6 sind so steuerbar, daß ein Plattenhalter 4 mit einer Platte 1 von einem Plattenmagazin 3 in ein leeres Aufnahmefach des anderen Plattenmagazins 3 befördert werden kann. Wenn beispielsweise eine Platte 1 aus dem linken Plattenmagazin 3 in dem rechten Plattenmagazin 3 abgelegt werden soll, dann erfaßt zunächst die linke in Bereitschaftsposition zu dem linken Plattenmagazin 3 stehende Auszugeinrichtung 6 den entsprechenden Plattenhalter 4 mit der Platte 1 und befördert dann den Plattenhalter 4 in eine Mittenposition auf der Transporteinrichtung 5, in der sie den Plattenhalter wieder freigibt. Dann fährt die Transporteinrichtung 5 wieder zu dem freien Aufnahmefach des rechten Plattenmagazins 3. Gleichzeitig oder gegebenenfalls anschließend fährt die andere Auszugeinrichtung 6 aus ihrer Bereitschaftsposition zu dem rechten Plattenmagazin 3 in ihre linke Endstellung auf der Transporteinrichtung 5 und erfaßt hier den Plattenhalter 4 und befördert diesen unter Rückkehr in ihre Bereitschaftsposition in das Aufnahmefach des rechten Plattenmagazins. Anschließend fährt die Transporteinrichtung 5 wieder in ihre Ausgangsstellung zurück.

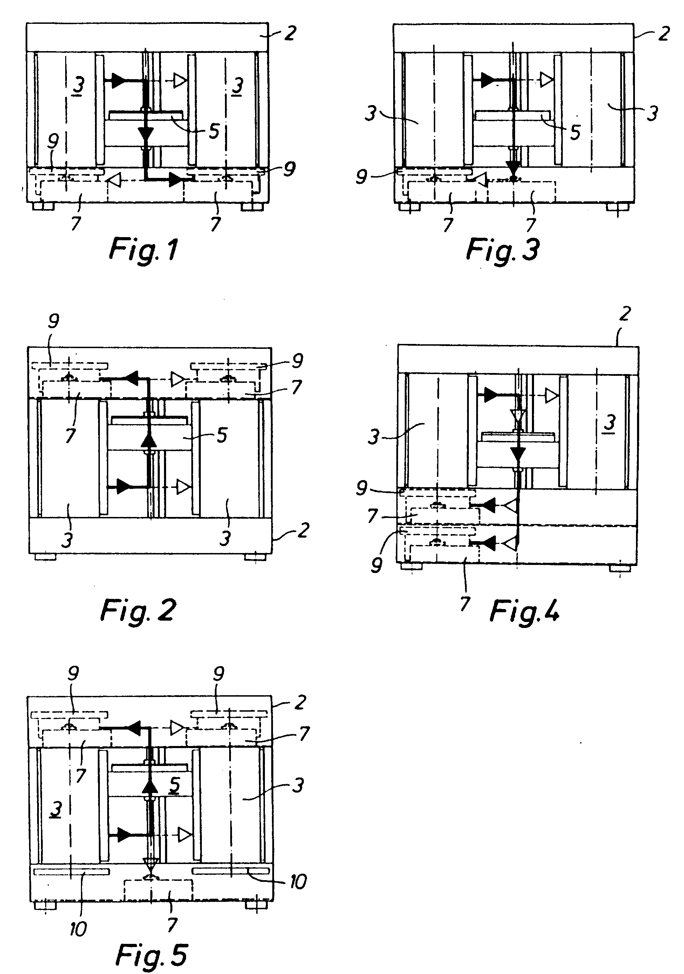

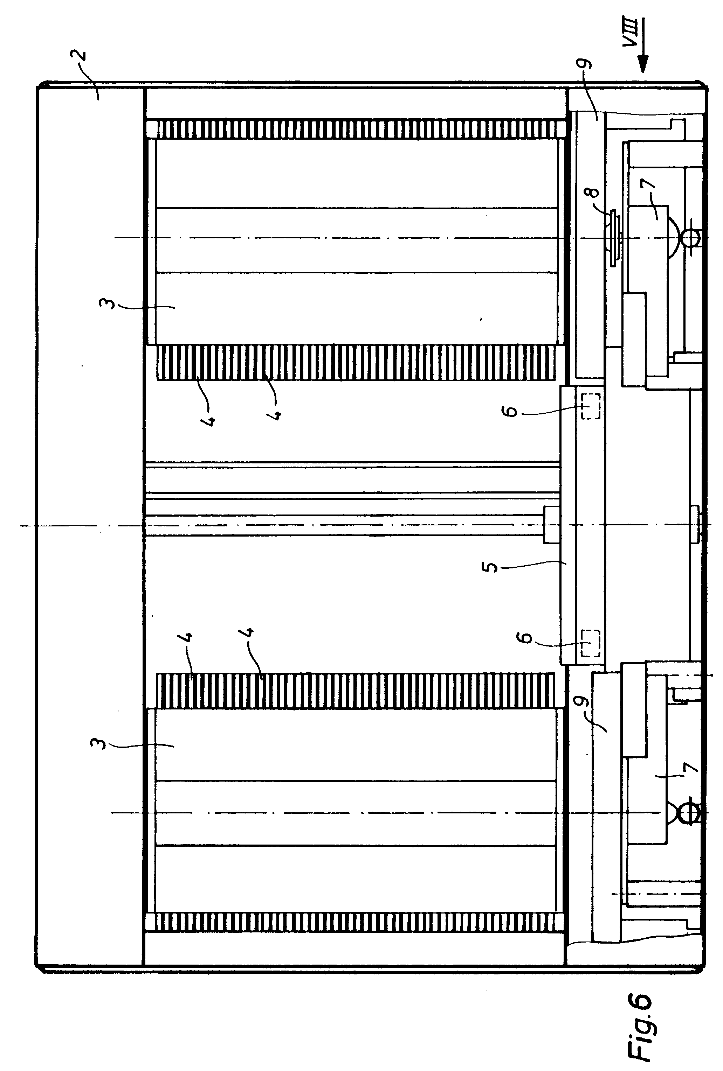

Bei dem Plattenabspielgerät nach den Fig. 1 und 6 ist unterhalb der beiden gegenüberliegenden Plattenmagazine 3 jeweils eine Abspieleinheit 7 mit einem Plattenteller 8 angeordnet, die über die Transporteinrichtung 5 unter Zwischenschaltung jeweils einer oberhalb der Abspieleinheiten 7 angebrachten Hebe- und Senkeinrichtung 9 bedienbar sind. Hierbei kann beispielsweise eine Platte 1 mit dem zugehörigen Plattenhalter 4 durch die in Bereitschaftsposition befindliche linke Auszugeinrichtung 6 auf die Transporteinrichtung 5 befördert werden. Anschließend fährt die Transporteinrichtung 5 in die Übergabehöhe der in der oberen Endstellung befindlichen linken Hebe- und Senkeinrichtung 9. Dann wird die Platte 1 mit der Plattenhalterung 4 mittels der Auszugeinrichtung 6 in die Hebe- und Senkeinrichtung 9 übergeben, die daraufhin unter entsprechender Abwärtsbewegung die Platte 1 auf den Plattenteller 8 der Hebe- und Senkeinrichtung 9 ablegt. Während des Abspielens dieser Platte 1 kann bereits eine weitere Platte 1 mit dem zugehörigen Plattenhalter 4 aus dem linken Plattenmagazin geholt werden, die durch entsprechende Ansteuerung der Auszugeinrichtungen 6 und der Verfahrwege der Transporteinrichtung 5 sowie der rechten Hebe- und Senkeinrichtung 9 auf dem Plattenteller 8 der rechten Abspieleinheit 7 abgelegt werden kann. Damit ist ein unmittelbares Abspielen der Platten hintereinander, gegebenenfalls unter Überblendung der Musikstücke, möglich, Nach dem Abspielen werden die Platten unter Umkehrung der vorhergehend genannten Bewegungsabläufe wieder in dem linken Plattenmagazin 3 abgelegt. Selbstverständlich kann bei entsprechender Ansteuerung eine Platte aus dem rechten oder linken Plattenmagazin 3 auf der rechten oder linken Abspieleinheit 7 abgespielt werden.

Bei der in Fig. 2 gezeigten Ausführungsform des Plattenabspielgerätes sind die beiden Abspieleinheiten 7 mit den zugehörigen Hebe- und Senkeinrichtungen 9 oberhalb der Plattenmagazine 3 angeordnet, während bei der Ausführung des Plattenabspielgerätes nach Fig. 3 die eine Abspieleinheit 7 mit einer zugehörigen Hebe- und Senkeinrichtung 9 unter dem linken Plattenmagazin 3 und die andere Abspieleinheit 7 unmittelbar unter der Transporteinrichtung 5 angeordnet ist, wobei die einzelne Platte auf dieser Abspieleinheit 7 ohne Zwischenschaltung einer Hebe- und Senkeinrichtung 9 ablegbar ist. Bei dem in Fig. 4 veranschaulichten Plattenabspielgerät befinden sich zwei Abspieleinheiten 7 mit jeweils zugehöriger Hebe- und Senkeinrichtung 9 unterhalb des linken Plattenmagazins 3. Das in Fig. 5 dargestellte Plattenabspielgerät weist zwei oberhalb der Plattenmagazine 3 liegende Abspieleinheiten 7 mit zugehörigen Hebe- und Senkeinrichtungen 9 und eine unmittelbar unter der Transporteinrichtung 5 liegende Abspieleinheit 7 auf. hierbei ist unterhalb der Plattenmagazine 3 jeweils ein Lade-Schubfach 10 vorgesehen. Das einzelne Lade-Schubfach 10 nimmt einen mit einer Platte 1 bestückten Plattenhalter 4 auf, der im eingeschobenen Zustand des Lade-Schubfaches 10 von der Transporteinrichtung 4 erfaßt werden kann. Zu diesem Zweck steht der Plattenhalter 4 seitlich über das Lade-Schubfach 10 vor. Im herausgezogenen Zustand des Lade-Schubfaches 10 kann die Platte 1 leicht von Hand ausgewechselt werden.

An der Rückseite des Gehäuses 2 befinden sich zwei parallel zueinander und vertikal verlaufende Führungsstangen 11, auf denen die Transporteinrichtung 5 gleitbeweglich gelagert ist. Der mittig zum Gehäuse 2 angeordneten Führungsstange 11 ist ein parallel dazu verlaufender, über Umlenkrollen 12 geführter Zahnriemen 13 zugeordnet, der über eine Klemmhalterung mit der transporteinrichtung 5 verbunden ist. Die untere Umlenkrolle 12 für den Zahnriemen 13 ist mit einer weiteren Umlenkrolle 14 für einen Zahnriemen 15 gekoppelt, der mit dem Antriebsrad 16 eines drehrichtungsumkehrbaren Antriebsmotors 17 verbunden ist. Im übrigen umfaßt die Transporteinrichtung 5 einen Tragarm 18 mit einem Plattenandrücker 21.

Jede Hebe- und Senkeinrichtung 9 ist über eine motorgetriebene Exzenter-Steuerung 19 auf- und abbewegbar. Die Hebeund Senkeinrichtung 9 weist einen Tragarm 20 für die Aufnahme eines Plattenhalters 4 mit einer Platte 1 auf. Dieser Tragarm 20 trägt einen mit der Achse des Plattentellers 8 der Abspieleinheit 7 ausgerichteten mit Magnetkraft arbeitenden Plattenandrücker 21. Über eine Halterung 22 ist der Tragarm 20 gleitbeweglich auf einer vertikal angeordneten Führungsstange 23 gelagert. Ein an der Halterung 22 befestigter Antriebsmotor 24 ist über ein Schneckengetriebe 25 mit dem auf der Welle 26 des Schneckenrades 27 sitzenden Exzenter 28 gekoppelt, der sich auf einer ortsfesten Rolle 29 abstützt. Der Exzenter 28 ist so ausgelegt, daß durch diesen die obere und untere Endlage der Hebe- und Senkeinrichtung 9 bestimmt wird. Zwei übereinanderliegende, an der Halterung 22 befestigte Gabelkoppler 30, die mit einem ortsfesten Steg 31 zusammenwirken dienen zur Erkennung der oberen und unteren Endlage der Hebe- und Senkeinrichtung 9. Zur Erfassung der exakten Lage des Plattenhalters 4 mit der Platte 1 innerhalb der Hebe- und Senkeinrichtung 9 ist an der Halterung 22 ein Sensor 32 abgebracht. Der Sensor 32 umfaßt einen in einem Lager 33 verschwenkbar aufgenommenen zweiarmigen Hebel 34, dessen einer Arm über eine an ihm ausgebildete Noppe 35 mit einer mittigen Noppe 36 an der Unterseite des Plattenhalters 4 und dessen anderer, feder-beaufschlagter Arm über eine endseitige Abwinklung mit einem an der Halterung 22 angebrachten Gabelkoppler 37 zusammenwirkt.

Die vorstehende Zeichnungsbeschreibung hat die Konstruktion sowohl wie die Anwendung des erfindungsgemäßen Plattenabspielgerätes in seinen Einzelheiten verdeutlicht. Es versteht sich jedoch für den Fachmann, daß der Grundgedanke der vorliegenden Erfindung eine wesentlich breitere Anwendung finden kann und nicht auf die hier speziell betrachteten Ausführungsbeispiele beschränkt ist.

## Patentansprüche

1. Plattenabspielgerät mit zwei einander gegenüberstehenden Plattenmagazinen (3), die in übereinanderliegenden Aufnahmefächern Plattenhalter (4) mit Platten (1) enthalten, und mit einer verfahrbaren Transporteinrichtung (5), um eine gewünschte Platte (1) mit dem zugehörigen Plattenhalter (4) zwischen dem Aufnahmefach und einer von mehreren, in der Vertikalachse der Plattenmagazine (3) zugeordneten Abspieleinheiten (7) hin und her zu befördern, dadurch gekennzeichnet, daß
- oberhalb einer jeden Abspieleinheit (7) eine über eine motorgetriebene Exzenter-Steuerung (19) bewegbare Hebe- und Senkeinrichtung (9) angeordnet ist,
- die Hebe- und Senkeinrichtung (9) einen mit einem Plattenandrücker (21) versehenen Tragarm (20) für die Aufnahme des Plattenhalters (4) mit der Platte (1) aufweist, und
- der Tragarm (20) über eine mit der Exzenter-Steuerung (19) gekoppelte Halterung (22) gleitbeweglich auf einer vertikal verlaufenden Führungsstange (23) gelagert ist.

2. Plattenabspielgerät nach Anspruch 1, dadurch gekennzeichnet, daß ein an der halterung (22) befestigter Antriebsmotor (24) über ein Schneckengetriebe (25) mit dem auf der Welle (26) des Schneckenrades (27) sitzenden Exzenter (28) gekoppelt ist, wobei der Exzenter (28) sich derart auf einer ortsfesten Rolle (29) abstützt, daß durch diesen die obere und untere Endlage der Hebeund Senkeinrichtung (9) bestimmt wird.

3. Plattenabspielgerät nach den Ansprüchen 1 und 2, dadurch gekennzeichnet, daß zur Erkennung der oberen und unteren Endlage der Hebe- und Senkeinrichtung (9) an der Halterung (22) zwei übereinanderliegende Gabelkoppler (30) befestigt sind, die mit einem entsprechend ortsfest angeordneten Steg (31) zusammenwirken.

4. Plattenabspielgerät nach einem der Ansprüche 1 bis 3, dadurch gekennzeichnet, daß an der Halterung (22) ein Sensor (32) zur Überwachung der exakten Ausrichtung der in dem Plattenhalter (4) gespeicherten Platte (1) zu dem Plattenteller (8) der Abspieleinheit (7) angeordnet ist.

5. Plattenabspielgerät nach einem der Ansprüche 1 bis 4, dadurch gekennzeichnet, daß die einen Plattenhalter (4) mit einer Platte (1) aufnehmende Hebe- und Senkeinrichtung (9) bei ihrer Abwärtsbewegung über die zugehörige Abspieleinheit (7) hinaus in ihre Endposition die Platte (1) unter Abheben aus dem Plattenhalter (4) auf den Plattenteller (8) der Abspieleinheit (7) aufsetzt und mittels des an dem Tragarm (20) der Hebe- und Senkeinrichtung (9) feststehend angeordneten Plattenandrückers (21) mit dem Plattenteller (8) verspannt.

## Claims

1. A disc record player comprising two record magazines (3) which stand opposite one another and which contain record holders (4) with records (1) in storage compartments disposed one above the other, a drivable transport device (5) for conveying a desired record (1) with its associated holder (4) back and forth between the storage compartment and one of several playback units (7) provided on the vertical axis of the record magazines (3), CHARACTERIZED IN THAT:
- a raising and lowering device (9) is movable by means of a motor driven eccentric-control (19) and is arranged above each playback unit (7);
- the raising and lowering device (9) comprises a carrying arm (20) for receiving the record holder (4) with its record (1) and provided with a disc record hold-down device (21), and
- the carrying arm (20) is borne slidingly on a vertically extending guide rod (23) by means of a support (22) coupled with the eccentric-control (19).

2. A disc record player according to Claim 1 CHARACTERIZED IN THAT a drive motor (24) is attached to the support (22) and is coupled through a worm device (25) with the eccentric (28), the eccentric (28) sits on the shaft (26) of the worm wheel (27), and the eccentric (28) rests on a fixed roller (29) in such a way that the eccentric (28) determines the upper and lower end positions of the lifting and lowering device (9).

3. A disc record player according to Claim 1 or 2 CHARACTERIZED IN THAT, for the recognition of the upper and lower end positions of the lifting and lowering device (9), two photo-cells (30) are fixed to said support (22) at locations one above the other and cooperate with a suitably stationary peg (31).

4. A disc record according to any one of Claims 1 to 3 CHARACTERIZED IN THAT a sensor (32) is arranged on said support (22) to monitor the exact disposition of the disc record (1) stored on the record holder (4) relative to the turntable (8) of the player unit (7).

5. A disc record according to any of Claims 1 to 4 CHARACTERIZED IN THAT the raising and lowering device (9), by its downward movement over the associated playback unit (7) into its end position when carrying a record holder (4) with a record (1), and on withdrawal of the record (1) from its holder (4), places the record (1) onto the turntable of the player unit (7), and, by means of the hold-down device (21) fixed to the support arm (20) of the raising and lowering device (9), forces the record (1) against the turntable (8).

## Revendications

1. Tourne-disque avec deux magasins de disques (3) se faisant face l'un l'autre, qui contiennent, dans des cases de réception superposées, des supports de disque (4) avec des disques (1), et avec un dispositif de transport déplaçable (5), pour déplacer en va-et-vient un disque souhaité (1) avec le support de disque associé (4) entre la case de réception et l'une de plusieurs unités de tourne-disque (7) associées dans l'axe vertical des magasins de disques (3), caractérisé en ce que
- au-dessus de chaque unité de tourne-disque (7) est disposé un dispositif de levage et d'abaissement (9) déplaçable au moyen d'une commande à excentrique (19) motorisée,
- le dispositif de levage et d'abaissement (9) comporte un bras porteur (20) pourvu d'un presse-disque (21) pour la réception du support de disque (14) avec le disque (1), et
- le bras porteur (20) est déplaçable à coulissement sur une tige de guidage s'étendant verticalement (23), par l'intermédiaire d'une fixation (22) couplée à la commande à excentrique (19).

2. Tourne-disque selon la revendication 1, caractérisé en ce qu'un moteur d'entraînement (24), fixé sur la fixation (22), est couplé par un mécanisme à vis sans fin (25) avec l'excentrique (28) calé sur l'arbre (26) de la roue du mécanisme à vis sans fin (27), l'excentrique (28) prenant appui sur un galet fixe (29) de manière que celui-ci détermine la position de fin de course haute et basse du dispositif de levage et d'abaissement (9).

3. Tourne-disque selon les revendications 1 et 2, caractérisé en ce que pour détecter la position de fin de course haute et basse du dispositif de levage et d'abaissement (9) sont fixés sur la fixation (22) deux coupleurs à fourche (30) superposés, qui coopèrent avec une barrette (31) disposée fixement en correspondance.

4. Tourne-disque selon l'une des revendications 1 à 3, caractérisé en ce que sur la fixation (22) est prévu un capteur (32) pour le contrôle de l'orientation précise du disque (1) stocké dans le support de disque (4), par rapport au plateau de disque (8) de l'unité de tourne-disque (7).

5. Tourne-disque selon l'une des revendications 1 à 4, caractérisé en ce que le dispositif de levage et d'abaissement (9) recevant un support de disque (4) avec un disque (1) place, lors de son déplacement vers le haut, au-delà de l'unité de tourne-disque (7) correspondante, dans sa position de fin de course, le disque (1), en le soulevant du support de disque (4), sur le plateau de disque (8) de l'unité de tourne-disque (7) et le serre avec le plateau de disque (8), au moyen du presse-disque (21) disposé fixement sur le bras porteur (20) du dispositif de levage et d'abaissement (9).
